# EUROPÄISCHE PATENTANMELDUNG

(11) **EP 1 332 903 A2**
(43) Veröffentlichungstag der Anmeldung: **06.08.2003**
(21) Anmeldenummer: 03001087.0
(22) Anmeldetag: 18.01.2003
(51) Int. Cl.: B60J 7/057

(54) **Antriebsvorrichtung für Kraftfahrzeugschiebedächer**

(30) Priorität: 31.01.2002 DE 10203904
(71) Anmelder: ArvinMeritor GmbH, 63128 Dietzenbach (DE)
(72) Erfinder: Friedrich, Norbert, Dipl.-Ing., 61273 Wehrheim 1 (DE); Hattas, Rainer, Dipl.-Ing., 63584 Gründau (DE)
(74) Vertreter: Oppermann, Ewald, Dipl.-Ing.

(57) **Zusammenfassung**

Vorgeschlagen wird eine Antriebsvorrichtung für Kraftfahrzeugschiebedächer od.dergl. in unterschiedlichen Ausführungsformen, bei der die bisher insbesondere für den Antrieb verlagerbaren Deckels (7), aber auch für den Antrieb verlagerbarer Beschattungs- oder Windleitelemente als Antriebsübertragungselemente verwendeten Antriebskabel mit Drahtgewindewicklung durch endlose, zugfeste und geräuscharm geführte Zahnriemen (10,11) ersetzt sind.

## Beschreibung

Die Erfindung betrifft eine Antriebsvorrichtung für Kraftfahrzeugschiebedächer entsprechend dem Oberbegriff des Patentanspruchs 1.

Die Bezeichnung "Kraftfahrzeugschiebedach" bzw. "Schiebedach", allein oder in Wortzusammensetzungen, soll für die Zwecke der vorliegenden Erfindung alle Konstruktionen einschließen, bei denen mindestens ein Deckel einer Dachöffnung eines Kraftfahrzeugs verlagerbar zugeordnet und dabei mittels der Antriebsvorrichtung bewegbar ist. Dazu gehören Konstruktionen, bei denen der Deckel nach Absenken seiner Hinterkante zur Freigabe der Dachöffnung unter die hintere feste Dachfläche verschiebbar ist, aber auch sogenannte Schiebehebedächer, bei denen der Deckel außerdem ausgehend von seiner die-Dachöffnung schließenden Stellung um eine in der Nähe seiner Vorderkante vorgesehene Schwenkachse zur Ausstellung über die feste Dachfläche verschwenkt werden kann. Schließlich soll diese Definition auch solche Konstruktionen umfassen, bei denen der Deckel nach Anheben seiner Hinterkante mehr oder weniger nach hinten über die hintere feste Dachfläche verlagerbar ist (sogenannte Oberfirstschiebedächer, Spoilerdächer). Auch solche Dachkonstruktionen sollen eingeschlossen sein, bei denen der mindestens eine Deckel nicht aus Blech oder Glas gebildet ist, sondern als Faltdach aus flexiblem Flächenmaterial.

Allen bekannten Antriebsvorrichtungen der eingangs genannten Art (z.B. DE 38 03 816 A1, DE 38 09 949 A1, DE 195 31 514 C1, DE 32 21 487 A1) ist gemeinsam, daß die beiden flexiblen Antriebsübertragungselemente sogenannte Antriebskabel sind, bestehend aus einem aus Stahldrähten verseilten flexiblen Kern, auf welchen schraubenlinienförmig eine sogenannte Arbeitswicklung aus einem Stahldraht mit kreisförmigem Querschnitt fest aufgewickelt ist. Das über ein Handkurbelgetriebe oder einen Elektrogetriebemotor angetriebene, an der Schiebedachkonstruktion ortsfeste Zahnritzel greift mit seiner Verzahnung unmittelbar mit den Arbeitswicklungen beider Antriebskabel nach Art eines Zahnstangenantriebs ein. Die Antriebskabel sind zug- und drucksteif in Führungskanälen und/oder Führungsrohren verschiebbar geführt und übertragen die Stell- und Betätigungsbewegungen auf die Führungteile des Deckels, mit denen sie in Mitnahmeverbindung stehen.

Diese seit langem bekannten und in hohen Stückzahlen eingesetzten Antriebsvorrichtungen mit Antriebskabeln als Antriebsübertragungselemente sind ständig weiterentwickelt worden und haben durchaus ihre Vorzüge, aber auch konstruktionsbedingte Nachteile. So läßt sich wegen des kreisförmigen Querschnittsumfangs der Draht-Arbeitswicklung und den unvermeidbaren Maßtoleranzen an dem Antriebskabel, dem Zahnritzel selbst und den Führungselementen für die Antriebskabel eine ideale Zahnform am Zahnritzel, die einem normalen optimierten Zahngetriebe entsprechen würde, nicht realisieren. Außerdem läßt sich nicht sicherstellen, daß immer mindestens ein Zahn des Zahnritzels mit jedem der beiden Antriebskabel eingreift, woraus ein ruckartiger, ungleichförmiger Vorschub der Antriebskabel resultiert. Dabei ändert sich der Wirkkreis des Zahnritzels durch Bewegungsspiel des Zahneingriffs, aber auch aufgrund von federnden Ausweichbewegungen der Antriebskabel. Im Ergebnis können bei Betätigung der bekannten Antriebsvorrichtungen auf die Rahmenstruktur des Schiebedachs und damit auf das Fahrzeugdach selbst übertragbare Schwingungsanregungen entstehen, wodurch es zu einer als störend empfundenen Geräuschbildung bei Stell- und Antriebsbewegungen des Schiebedachs kommen kann, insbesondere dann, wenn das Zahnritzel durch einen Elektromotor angetrieben ist. Durch den unvermeidbaren Kontakt der Arbeitswicklung mit den Wandungen der Führungselemente für die Antriebskabel kann es darüber hinaus bei Stell- und Antriebsbewegungen zu störenden schabenden Geräuschen und zu einem erhöhten Werkstoffabrieb in den Eckradien der Kabelführungen kommen. Schließlich sei noch erwähnt, daß das Herstellungsverfahren für die Antriebskabel verhältnismäßig aufwendig ist, so daß die Antriebskabel die Kosten der bekannten Antriebsvorrichtungen erheblich beeinflussen.

Der Erfindung liegt die Aufgabe zugrunde, eine Antriebsvorrichtung der eingangs angegebenen Art bereitzustellen, mit welcher gleichförmige und geräuscharme Stell- und Antriebsbewegungen der Antriebsübertragungselemente ohne Schwingungsanregungen bei einfacher und kostengünstiger Ausbildung der Antriebsvorrichtung ermöglicht werden.

Die Erfindung löst diese Aufgabe auf die im Patentanspruch 1 angegebene Weise. Vorteilhafte oder zweckmäßige Weiterbildungen der Erfindung gehen aus den Unteransprüchen hervor und sind nachfolgend ebenfalls näher beschrieben.

Durch die erfindungsgemäße Verwendung von endlosen Zahnriemen als Antriebsübertragungselemente werden alle aufgeführten Nachteile der Antriebskabel vermieden. Die endlosen Zahnriemen übertragen ausschließlich Zugkräfte auf die beiderseits des Deckels befindlichen Führungs- und Stellteile. Die Zahnriemen haben einen umlaufenden Kraftverlauf, so daß der Mitnahmeangriff an jeder Stelle außerhalb der Umlenkstellen der Zahnriemen erfolgen kann, wobei der Mitnahmeangriff für die Führungs- und Stellteile beiderseits des Deckels an sich gleichgerichtet bewegenden Zahnriemenabschnitten vorzunehmen ist. Durch die partielle Umschlingung des Zahnritzels, die vorzugsweise 180° des Ritzelumfangs beträgt, stehen immer mehrere Zähne des Zahnritzels mit Zähnen des Zahnriemens im Eingriff, so daß von der Zahneingriffsituation keine geräuschbildenden Einflüsse ausgehen können.

Wenn hier von "endlosen" Zahnriemen die Rede ist, so schließt das selbstverständlich auch solche Zahnriemen ein, die zunächst in der gewünschten Gesamtlänge als Zahnriemenstück hergestellt oder abgelängt sind, dessen beide Enden ggf. nach der Montage an der Antriebsvorrichtung in geeigneter Weise zu einem endlosen Zahnriemen zusammengefügt sind.

Vorteilhaft sind hierbei entsprechend Anspruch 2 die Innenverzahnung der Zahnriemen und das Zahnritzel geradverzahnt, so daß sich dieser Zahneingriff optimieren läßt. Bei entsprechender Ausbildung der beiderseitigen Zahnflanken kann praktisch ein spielfreier Zahneingriff erzielt werden.

Die Umlenkelemente sind zur Reibungsminderung im Antriebssystem wie im Anspruch 3 angegeben vorteilhaft als an der Schiebedachkonstruktion drehbar gelagerte Umlenkrollen ausgebildet, die bei entsprechender Führung der Zahnriemen in ihrer Dicke etwa der Zahnriemenbreite entsprechen können, also im Interesse einer geringen Bauhöhe der Antriebsvorrichtung nur scheibenförmig sind. Vorzugsweise sind die Umlenkrollen nach Anspruch 4 dem angetriebenen Zahnritzel entsprechend mit einer Verzahnung versehen, in welche die Innenverzahnung des Zahnriemens eingreift.

In weiterer Ausbildung der Antriebsvorrichtung ist die Spannung der Zahnriemen jeweils mittels einer Spannvorrichtung einstellbar, wie aus Anspruch 5 hervorgeht. Diese Spannvorrichtungen sind entsprechend Anspruch 6 vorzugsweise mit den Umlenkrollen wirkverbunden. Zweckmäßig sind hierbei gemäß Anspruch 7 die Umlenkrollen an feststellbaren Spannschiebern drehbar gelagert. Die Spannschieber können aber auch zur Spannung der Zahnriemen permanent federbeaufschlagt sein.

Die Führungsteile an jeder der beiden Deckelseiten stehen mit jeweils einem der Zahnriemen für den Deckelantrieb in Mitnahmeverbindung, damit der Deckel an beiden Seiten gleichzeitig und synchron angetrieben werden kann. Im Anspruch 8 ist angegeben, wie mit der Innenverzahnung der Zahnriemen eingreifende Mitnahmeglieder an den Führungsteilen angeordnet und ausgestaltet sein können.

Die bevorzugte Querschnittsform und -orientierung der Zahnriemen ist in Anspruch 9 angegeben. Eine Zahnriemenbreite von etwa 4 mm entsprechend etwa der Höhe bzw. Dicke des Zahnritzels bei einigen der Ausführungsformen ist für die Zwecke der vorliegenden Erfindung ausreichend, was zu einer vorteilhaft geringen Bauhöhe der Antriebsvorrichtung beiträgt. Für die Ausbildung von Zahnriemen guter Flexibilität, die für eine Kraftübertragung von etwa 400 N je Deckelseite ausreichend zugfest sind, stehen mehrere Ausführungsformen zur Verfügung, wie aus den Ansprüchen 10 bis 14 hervorgeht.

Sämtliche Funktionsteile der Antriebsvorrichtung, wie Zahnriemen, Zahnritzel, Umlenkelemente und Spannvorrichtung, sind in Weiterführung des Erfindungsgedankens an einem Führungsrahmen der Schiebedachkonstruktion angebracht, wie im Anspruch 15 angegeben ist, so daß schon vor der Montage am Kraftfahrzeug ein funktionsfähiges und einbaufertiges Modul zur Verfügung steht, wobei auch ggf. der elektromotorische Antrieb schon am Führungsrahmen angebracht sein kann.

Die Zahnriemen können entsprechend Anspruch 16 vorteilhaft in Führungskanälen, die am Führungsrahmen vorgesehen sind, geführt sein. Bei der Ausgestaltung der Führungskanäle ist auf die erforderliche Angriffsmöglichkeit der Mitnahmeglieder an die Zahnriemen im Deckelbewegungsbereich und auf die Montageerfordernisse für die Zahnriemen zu achten.

Im Interesse eines optimalen Reibwertes der Zahnriemen gegenüber den Wandungsflächen der Führungskanäle können die Wandungsflächen in Abhängigkeit von dem Werkstoff der Zahnriemen und/oder deren Oberflächenbeschaffenheit eine besondere Ausbildung, sei es durch entsprechende Werkstoffpaarung und/oder Oberflächenbeschichtung der Wandungsflächen, erfahren, wie aus Anspruch 17 hervorgeht.

Die Erfindung erlaubt sowohl einen gemeinsamen Antrieb beider Zahnriemen mittels eines angetriebenen Zahnritzels (Anspruch 18) als auch die Zuordnung eines angetriebenen Zahnritzels je Zahnriemen (Anspruch 19), wobei im letzteren Fall für den erforderlichen Synchronlauf die in den Ansprüchen 20 und 21 angegebenen Ausführungsalternativen bevorzugt werden.

Ausführungsbeispiele der Erfindung werden nachfolgend anhand der schematisch ausgeführten Zeichnungen näher erläutert. Darin zeigt:
- Fig. 1: die Draufsicht auf einen Führungsrahmen eines Schiebedachs, mit Deckel und der Antriebsvorrichtung in einer ersten Ausführungsform,
- Fig. 2: die Rückansicht der in Fig. 1 gezeigten Anordnung,
- Fig. 3: eine abgebrochene und teilweise im Schnitt dargestellte Einzelheit des Führungsrahmens und der Antriebsvorrichtung mit einem gemeinsamen Antriebsritzel für beide Zahnriemen, entsprechend dem Detailkreis III in Fig. 1,
- Fig. 4: den Schnitt durch die in Fig. 3 gezeigte Anordnung entlang der Schnittverlaufslinie IV-IV,
- Fig. 5: eine abgebrochene und teilweise im Schnitt dargestellte Einzelheit des hinteren Endes eines seitlichen Rahmenteils des Führungsrahmens, mit einer Umlenkrolle und einer Spannvorrichtung, entsprechend dem Detailkreis V in Fig. 1,
- Fig. 6: den Schnitt durch die in Fig. 5 gezeigte Anordnung entlang der Schnittverlaufslinie VI-VI in Fig. 5,
- Fig. 7: eine teilweise im Schnitt dargestellte Draufsicht auf ein abgebrochen gezeigtes seitliches Rahmenteil des Führungsrahmens, mit einem Führungsteil und der Mitnahmeverbindung zwischen diesem Führungsteil und einem Zahnriemen,
- Fig. 8: einen Schnitt durch die in Fig. 7 gezeigte Anordnung,
- Fig. 9: die Draufsicht auf einen Führungsrahmen eines Schiebedachs, mit Deckel und einer zweiten Ausführungsform der Antriebsvorrichtung, bei welcher jedem der beiden Zahnriemen ein eigener Antrieb zugeordnet ist,
- Fig. 10: die Rückansicht der in Fig. 9 gezeigten Anordnung und
- Fig. 11: die Draufsicht auf einen Führungsrahmen eines Schiebedachs, mit Deckel und einer Variante der zweiten Ausführungsform der Antriebsvorrichtung.

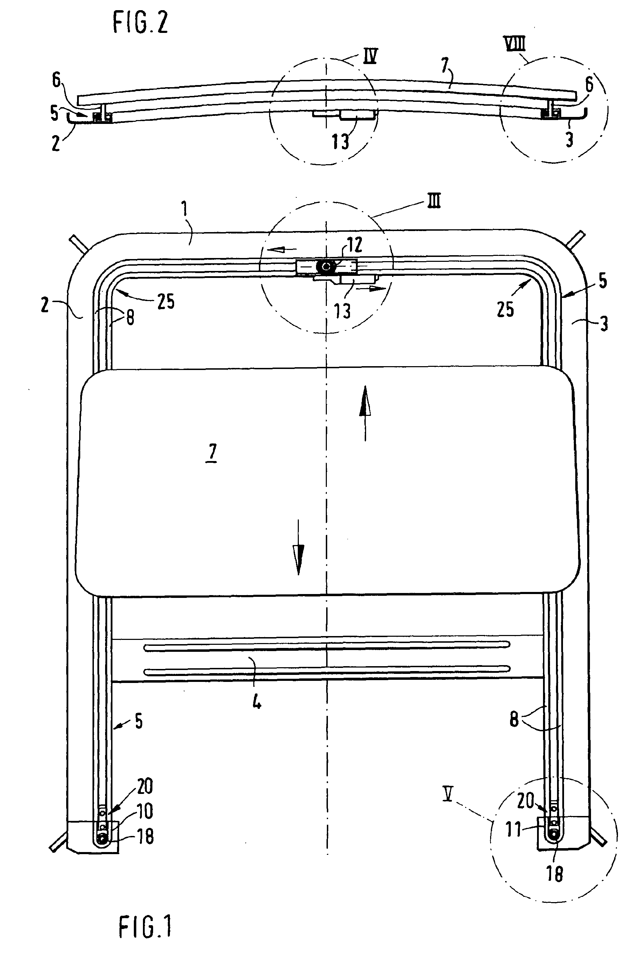

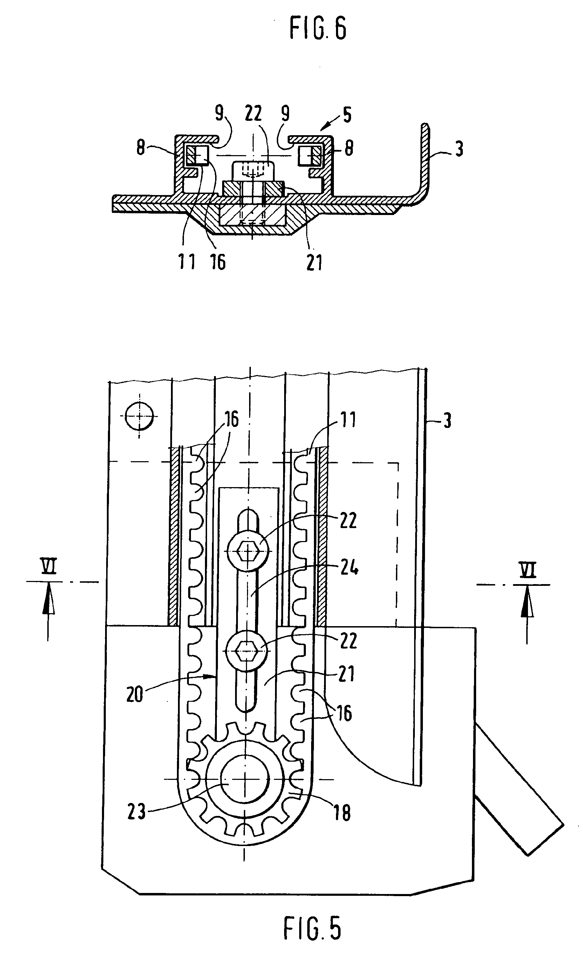

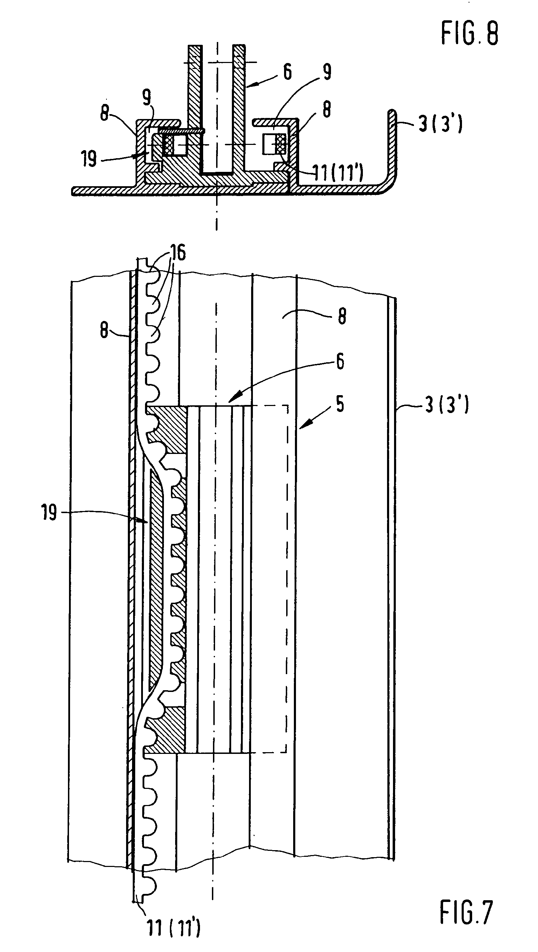

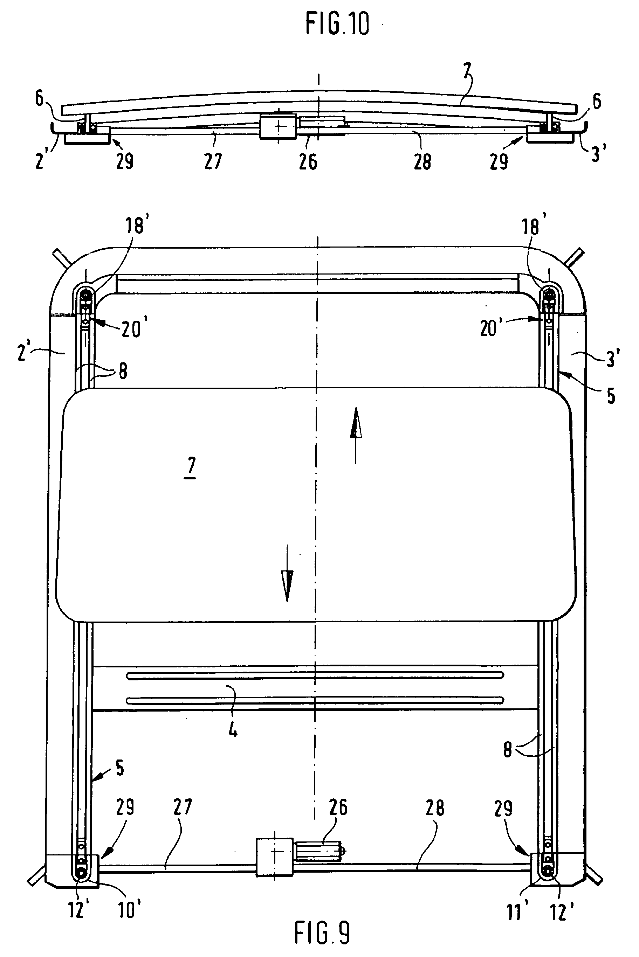

Der in Fig. 1 dargestellte modulartig vormontierte Führungsrahmen, der zur Anbringung an einem mit einer Dachöffnung versehenen Kraftfahrzeugdach (nicht dargestellt) bestimmt ist, besteht im wesentlichen aus einem vorderen Rahmenquerteil 1, zwei seitlichen Rahmenteilen 2 und 3 und ggf. einem die seitlichen Rahmenteile 2, 3 gegeneinander aussteifenden mittleren Querprofil 4. Die Rahmenteile 1, 2, 3 bilden im gezeigten Beispiel einen einteiligen profilierten Führungsrahmen mit einer angeformten über die drei Rahmenteile umlaufenden Führungsschiene 5. Im Bereich der seitlichen Rahmenteile 2, 3 dient die Führungsschiene 5, deren Profil etwa aus Fig. 6 ersichtlich ist, der Verschiebeführung von Führungsteilen 6, von denen eines in den Figuren 7 und 8 dargestellt ist und die in den Figuren 2 und 10 angedeutet sind. Die Führungsteile 6 stehen ihrer hier nicht näher darzulegenden Funktion entsprechend mit dem Deckel 7 zu dessen Verlagerung in Verbindung.

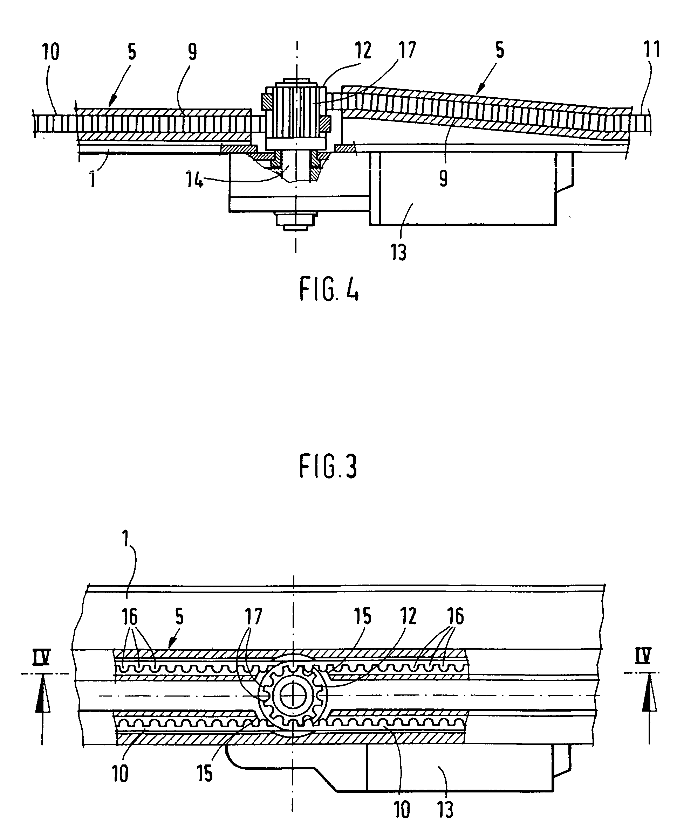

Zur näheren Erläuterung der ersten Ausführungsform der Antriebsvorrichtung wird nunmehr auf Fig. 1 in Verbindung mit den Figuren 3, 4, 6 und 8 Bezug genommen. Wie am besten aus Fig. 6 hervorgeht, besitzt die Führungsschiene 5 zwei voneinander beabstandete im Querschnitt E-förmige Profilvorsprünge 8, die parallel zueinander verlaufen, wie Fig. 1 veranschaulicht. Die beiden oberen gegenüberliegenden Profilhohlräume bilden Führungskanäle 9 für die beiden noch näher zu erläuternden darin verschiebbaren Zahnriemen 10 und 11. Die beiden unteren gegenüberliegenden nicht näher bezeichneten Führungskanäle dienen der Führung der Führungsteile 6. Während an den seitlichen Rahmenteilen 2, 3 im Bewegungsbereich des Deckels 7 die Führungskanäle 9 etwa U-förmig und zueinander gekehrt offen sind, können die Führungskanäle 9 an dem vorderen Rahmenquerteil 1 im wesentlichen geschlossen sein, wie aus Fig. 3 hervorgeht.

Etwa in der Mitte des Rahmenquerteils 1 befindet sich das Zahnritzel 12 der Antriebsvorrichtung, das im gezeigten Beispiel von einem Elektrogetriebemotor 13, der von unten am Rahmenquerteil 1 befestigt ist, in beiden Drehrichtungen antreibbar ist. Das Zahnritzel 12 befindet sich mittig zwischen den beiden Führungskanälen 9 und kann von oben her über seine Antriebswelle 14 eingeführt und mit dem Elektrogetriebemotor 13 drehfest gekuppelt werden. An der Stelle des Eingriffs zwischen dem Zahnritzel 12 und den Zahnriemen 10, 11 sind Ausfräsungen 15 in den gegenüberliegenden Wandungen der Profilvorsprünge 8 zur Freilegung der Führungskanäle 9 angebracht (Fig. 3).

Die die Antriebsübertragungselemente bildenden endlosen und zugfesten Zahnriemen 10, 11 sind an ihrer Innenseite mit einer Innenverzahnung 16 versehen, welche der Verzahnung 17 des Zahnritzels 12 komplementär ist. Zahnriemen 10, 11 und Zahnritzel 12 sind übereinstimmend geradverzahnt. Wie Fig. 6 am Beispiel des einen Zahnriemens 11 erkennen läßt, weisen die Zahnriemen im wesentlichen die Querschnittsform eines flachen Rechtecks auf, dessen längere Kanten die verzahnte Innenseite bzw. die Außenseite der Zahnriemen 10, 11 bilden.

Die beiden Zahnriemen 10, 11 sind an den Enden der beiden seitlichen Rahmenteile 2, 3 jeweils an einem Umlenkelement, welches im gezeigten Beispiel eine entsprechend dem Zahnritzel 12 verzahnte drehbar gelagerte Umlenkrolle 18 ist, umgelenkt (Fig. 5).

Die Mitnahmeverbindung zwischen den beiden Zahnriemen 10, 11 und den Führungsteilen 6 ist auf jeder Seite des Deckels 7 jeweils durch den Eingriff zwischen der Innenverzahnung 16 mit einem entsprechend verzahnten am Führungsteil 6 festgelegten Mitnahmeglied 19 herbeigeführt.

Die Spannung der beiden Zahnriemen 10, 11 ist jeweils mittels einer am Führungsrahmen der Schiebedachkonstruktion abgestützten Spannvorrichtung 20, die am Beispiel des Zahnriemens 11 in Fig. 5, 6 dargestellt ist, einstellbar. Die Spannvorrichtung 20 wirkt unmittelbar auf die Umlenkrolle 18 ein. Hierfür besitzt die Spannvorrichtung 20 einen parallel zu beiden gegenüberliegenden Zahnriemenabschnitten verschiebbar geführten Spannschieber 21, der nach Einstellung der Riemenspannung mittels Feststellschrauben 22 gegenüber dem seitlichen Rahmenteil festgesetzt werden kann. Am Ende des Spannschiebers 21 ist die Umlenkrolle 18 an einem Lagerbolzen 23 drehbar gelagert. Der Verschiebbarkeit des Spannschiebers 21 dient eine Langlochausnehmung 24, durch welche die Feststellschrauben 22 hindurchgreifen.

Wie aus Fig. 1 ersichtlich ist, sind die Zahnriemen 10, 11, das Zahnritzel 12 mit seinem Elektrogetriebemotor 13, die Umlenkrollen 18 und die Spannvorrichtungen 20 sämtlich am Führungsrahmen der Schiebedachkonstruktion angebracht.

Eine Besonderheit der in den Figuren 1 bis 4 dargestellten ersten Ausführungsform der Antriebsvorrichtung besteht darin, daß beide Zahnriemen 10, 11 das am vorderen Rahmenquerteil 1 angeordnete gemeinsame Zahnritzel 12 partiell umschlingen, und zwar um jeweils 180°, wie die Figuren 3 und 4 verdeutlichen. Zu diesem Zweck sind die Zahnriemen 10, 11 im Bereich des Zahnritzels 12 durch einen Höhenversatz zwischen den zu beiden Seiten des Zahnritzels 12 befindlichen Führungskanälen 9 in unterschiedlicher Höhe geführt, d.h. befinden sich ohne gegenseitige Berührung unmittelbar übereinander (Fig. 4). Dementsprechend entspricht die Höhe der Ritzelverzahnung 17 des gemeinsamen Zahnritzels 12 etwa der doppelten Breite der Zahnriemen 10, 11. Nach Umschlingung des gemeinsamen Zahnritzels 12 sind die Zahnriemen 10, 11 jeweils über eine 90°-Umlenkstelle 25 (Fig. 1) zu einem seitlichen Rahmenteil 2 bzw. 3 geführt. Das gemeinsame Zahnritzel 12 sorgt bei dieser ersten Ausführungsform der Antriebsvorrichtung für einen synchronen Antrieb der beiden Seiten des Deckels 7.

Das gemeinsame Zahnritzel mit seinem Elektrogetriebemotor kann abweichend von der gezeichneten und beschriebenen ersten Ausführungsform der Antriebsvorrichtung in umgekehrter Anordnung statt am vorderen Rahmenquerteil an einem hinteren (nicht gezeigten) Rahmenquerteil vorgesehen sein, so daß die Bauhöhe der Schiebedachkonstruktion im vorderen Bereich erheblich verringert wird, wodurch im vorderen Fahrzeuginnenraum eine Vergrößerung der Kopffreiheit erzielt wird.

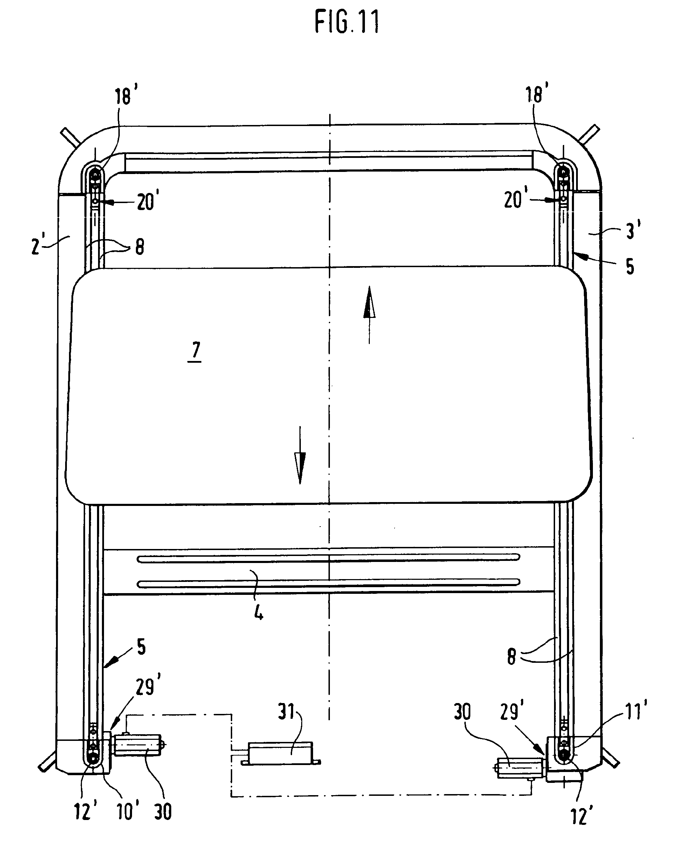

Die zweite Ausführungsform der Antriebsvorrichtung, die in Fig. 9, 10 und in einer Variante in Fig. 11 dargestellt ist, unterscheidet sich von der vorstehend beschriebenen ersten Ausführungsform im wesentlichen dadurch, daß jeder der beiden Zahnriemen 10', 11' nur an einem seitlichen Rahmenteil 2', 3' des Führungsrahmens geführt ist. Die beiden Zahnriemen 10', 11' liegen sich dabei etwa in Parallellage und etwa um die Deckelbreite voneinander getrennt gegenüber. Auch hierbei ist die Bauhöhe der Schiebedachkonstruktion im Bereich des vorderen Rahmenquerteils 1' geringer und daher die Kopffreiheit entsprechend vergrößert.

An einem Ende jeden seitlichen Rahmenteils 2', 3', im gezeigten Beispiel am hinteren Ende, umschlingt der Zahnriemen 10, 11' ein angetriebenes Zahnritzel 12' partiell, d.h. mit einem 180°-Umschlingungswinkel, während der Zahnriemen 10', 11' an dem anderen Ende, im gezeigten Beispiel am vorderen Ende, des betreffenden Rahmenteils um eine mit einer Spannvorrichtung 20' ausgerüstete Umlenkrolle 18' geführt ist. Die Umlenkrollen 18' und die Spannvorrichtungen 20' sind so ausgebildet, wie das mit Bezug auf die erste Ausführungsform beschrieben wurde.

Bei der Ausführungsform gemäß Fig. 9, 10 ist für beide Zahnriemen 10, 10' bzw. für beide Zahnritzel 12' ein gemeinsamer Elektrogetriebemotor 26 vorgesehen, der über zwei Antriebswellen 27, 28 und über diesen zugeordnete Winkelgetriebeanordnungen 29 üblicher Bauart (Schnecke/Schneckenrad; Kegelradpaar) mit dem betreffenden Zahnritzel 12' verbunden ist. Auf diese Weise wird ebenfalls ein zwangssynchronisierter Gleichlauf der beiden Zahnriemen 10', 11' für den Deckelantrieb sichergestellt.

Bei der in Fig. 11 gezeigten Variante der zweiten Ausführungsform der Antriebsvorrichtung ist für jedes der beiden Zahnritzel 12' ein vergleichsweise kleinerer Elektromotor 30 vorgesehen, der über eine jeweils zugeordnete Winkelgetriebeanordnung 29' mit dem betreffenden Zahnritzel 12' verbunden ist. Hierbei sind die beiden Elektromotore 30 mit einer den Gleichlauf der beiden Zahnriemen 10', 11' erzeugenden elektronischen Synchronisationseinrichtung 31 verbunden.

Mit der Erfindung wird eine Antriebsvorrichtung für Kraftfahrzeugschiebedächer od.dgl. in unterschiedlichen Ausführungsförmen vorgeschlagen, bei der die bisher insbesondere für den Antrieb des verlagerbaren Deckels, aber auch für den Antrieb verlagerbarer Beschattungs- oder Windleitelemente als Antriebsübertragungselemente verwendeten Antriebskabel mit Drahtgewindewicklung durch endlose, zugfeste und geräuscharm geführte Zahnriemen ersetzt sind.

### Bezugszahlenliste

- 1: Rahmenquerteil
- 2, 2': Seitliches Rahmenteil
- 3, 3': Seitliches Rahmenteil
- 4: Querprofil
- 5: Führungsschiene
- 6: Führungsteile
- 7: Deckel
- 8: Profilvorsprünge
- 9: Führungskanäle
- 10, 10': Zahnriemen
- 11, 11': Zahnriemen
- 12, 12': Zahnritzel
- 13: Elektrogetriebemotor
- 14: Antriebswelle
- 15: Ausfräsungen
- 16: Innenverzahnung
- 17: Verzahnung
- 18, 18': Umlenkrolle
- 19: Mitnahmeglied
- 20, 20': Spannvorrichtung
- 21: Spannschieber
- 22: Feststellschrauben
- 23: Lagerbolzen
- 24: Langlochausnehmung
- 25: Umlenkstelle
- 26: Elektrogetriebemotor
- 27: Antriebswelle
- 28: Antriebswelle
- 29, 29': Winkelgetriebeanordnung
- 30: Elektromotor
- 31: Synchronisationseinrichtung

## Patentansprüche

1. Antriebsvorrichtung für Kraftfahrzeugschiebedächer, mit zwei flexiblen Antriebsübertragungselementen, von denen das eine auf der einen Seite und das andere auf der gegenüberliegenden Seite eines verlagerbaren Elements, insbesondere eines Deckels (7) der Schiebedachkonstruktion mit Führungsteilen (6) für das verlagerbare Element in Mitnahmeverbindung steht, und die in der einen oder der entgegengesetzten Bewegungsrichtung durch den Eingriff mit einem Zahnritzel (12, 12'), das wahlweise in der einen oder in der anderen Drehrichtung antreibbar ist, synchron verschiebbar sind, **dadurch gekennzeichnet, daß** die beiden Antriebsübertragungselemente als endlose zugfeste Zahnriemen (10, 11; 10', 11') ausgebildet sind, welche an ihrer Innenseite mit einer der Verzahnung des Zahnritzels (12, 12') komplementären Innenverzahnung (16) versehen sind, wobei die Umlenkung der beiden Zahnriemen (10, 11; 10', 11') an einem Ende jeweils unter partieller Umschlingung des Zahnritzels (12, 12') und am anderen Ende jeweils an einem Umlenkelement erfolgt.

2. Antriebsvorrichtung nach Anspruch 1, **dadurch gekennzeichnet, daß** die Innenverzahnung (16) der Zahnriemen (10, 11; 10', 11') und das Zahnritzel (12, 12') geradverzahnt sind.

3. Antriebsvorrichtung nach Anspruch 1 oder 2, **dadurch gekennzeichnet, daß** die Umlenkelemente für die Zahnriemen (10, 11; 10', 11') an der Schiebedachkonstruktion drehbar gelagerte Umlenkrollen (18, 18') sind.

4. Antriebsvorrichtung nach Anspruch 3, **dadurch gekennzeichnet, daß** die Umlenkrollen (18, 18') eine dem Zahnritzel (12, 12') entsprechende Verzahnung besitzen.

5. Antriebsvorrichtung nach einem der Ansprüche 1 bis 4, **dadurch gekennzeichnet, daß** die Spannung der Zahnriemen (10, 11; 10', 11') jeweils mittels einer an der Schiebedachkonstruktion abgestützten Spannvorrichtung (20, 20') einstellbar ist.

6. Antriebsvorrichtung nach Anspruch 3 oder 4 und 5, **dadurch gekennzeichnet, daß** die Spannvorrichtungen (20, 20') mit den Umlenkrollen (18, 18') wirkverbunden sind.

7. Antriebsvorrichtung nach Anspruch 6, **dadurch gekennzeichnet, daß** die Spannvorrichtungen (20, 20') jeweils einen parallel zu den Zahnriemen (10, 11; 10', 11') verschiebbar geführten und feststellbaren Spannschieber (21) besitzen, an welchem die Umlenkrolle (18, 18') drehbar gelagert ist.

8. Antriebsvorrichtung nach einem der Ansprüche 1 bis 7, **dadurch gekennzeichnet, daß** die Mitnahmeverbindung zwischen den Zahnriemen (10, 11; 10', 11') und den Führungsteilen (6) jeweils durch den Eingriff zwischen der Innenverzahnung (16) mit einem entsprechend profilierten am Führungsteil (6) festgelegten Mitnahmeglied (19) herbeigeführt ist.

9. Antriebsvorrichtung nach einem der Ansprüche 1 bis 8, **dadurch gekennzeichnet, daß** die Zahnriemen (10, 11; 10', 11') im wesentlichen die Querschnittsform eines flachen Rechtecks aufweisen, dessen längere Kanten die Innenseite bzw. die Außenseite der Zahnriemen (10, 11; 10', 11') bilden.

10. Antriebsvorrichtung nach einem der Ansprüche 1 bis 9, **dadurch gekennzeichnet, daß** die Zahnriemen (10, 11; 10', 11') aus einem verzahnten Kunststoffband hergestellt sind.

11. Antriebsvorrichtung nach Anspruch 10, **dadurch gekennzeichnet, daß** in das Kunststoffband durchgehend eine leicht biegbare zugfeste Einlage eingeformt ist.

12. Antriebsvorrichtung nach Anspruch 11, **dadurch gekennzeichnet, daß** die zugfeste Einlage ein biegewechselfestes Metallband oder -seil ist.

13. Antriebsvorrichtung nach Anspruch 11 oder 12, **dadurch gekennzeichnet, daß** die Einlage mit dem auch die Innenverzahnung (16) bildenden Kunststoff umspritzt ist.

14. Antriebsvorrichtung nach einem der Ansprüche 1 bis 9, **dadurch gekennzeichnet, daß** die Zahnriemen (10, 11; 10', 11') aus einer Gliederkette hergestellt sind.

15. Antriebsvorrichtung nach einem der Ansprüche 1 bis 14, **dadurch gekennzeichnet, daß** Zahnriemen (10, 11; 10', 11'), Zahnritzel (12, 12'), Umlenkelemente und Spannvorrichtungen (20, 20') an einem Führungsrahmen der Schiebedachkonstruktion angebracht sind.

16. Antriebsvorrichtung nach Anspruch 15, **dadurch gekennzeichnet, daß** die Zahnriemen (10, 11; 10', 11') in Führungskahälen (9) des Führungsrahmens geführt sind, die im Querschnitt dem Zahnriemenquerschnitt angepaßt sind und im Bewegungsbereich des Deckels (7) U-förmig ausgebildet sind, wobei die offenen Seiten für den Angriff der Mitnahmeglieder (19) an die Zähnriemen (10, 11; 10', 11') bestimmt sind.

17. Antriebsvorrichtung nach Anspruch 16, **dadurch gekennzeichnet, daß** die den Zahnriemen (10, 11; 10', 11') zugekehrten Wandungsflächen der Führungskanäle (9) unter Berücksichtigung des Zahnriemenwerkstoffs reibwertoptimiert sind.

18. Antriebsvorrichtung nach einem der Ansprüche 1 bis 17, **dadurch gekennzeichnet, daß** für beide Zahnriemen (10, 11) ein gemeinsames aufgetriebenes Zahnritzel (12) am vorderen oder hinteren Rahmenquerteil (1) des Führungsrahmens angeordnet ist, welches von den beiden an dieser Stelle in unterschiedlicher Höhe geführten Zahnriemen (10, 11) partiell umschlungen ist, die anschließend jeweils zu einem seitlichen Rahmenteil (2, 3) geführt sind und etwa an dem Ende des betreffenden Rahmenteils um ein Umlenkelement geführt sind, wobei die Verzahnungshöhe des gemeinsamen Zahnritzels (12) etwa der doppelten Breite der Zahnriemen (10, 11) entspricht.

19. Antriebsvorrichtung nach einem der Ansprüche 1 bis 17, **dadurch gekennzeichnet, daß** jeder der beiden Zahnriemen (10', 11') nur an einem seitlichen Rahmenteil (2', 3') des Führungsrahmens geführt ist, etwa an einem Ende des Rahmenteils ein angetriebenes Zahnritzel (12') partiell umschlingt und etwa an dem anderen Ende des betreffenden Rahmenteils um ein Umlenkelement geführt ist.

20. Antriebsvorrichtung nach Anspruch 19, **dadurch gekennzeichnet, daß** für beide Zahnriemen (10', 11') ein gemeinsamer Elektrogetriebemotor (26) vorgesehen ist, der über zwei Antriebswellen (27, 28) mit den beiden Zahnritzeln (12') jeweils über eine Winkelgetriebeanordnung verbunden ist.

21. Antriebsvorrichtung nach Anspruch 19, **dadurch gekennzeichnet, daß** für jedes der beiden Zahnritzel (12') ein Elektromotor (30) vorgesehen ist, der über eine Winkelgetriebeanordnung mit dem betreffenden Zahnritzel verbunden ist, wobei die beiden Elektromotore (30) gleichlaufsynchronisiert sind.
